# EUROPÄISCHE PATENTANMELDUNG

(11) **EP 2 372 049 A1**
(43) Veröffentlichungstag der Anmeldung: **05.10.2011**
(21) Anmeldenummer: 11002498.1
(22) Anmeldetag: 25.03.2011
(51) Int. Cl.: E04H 15/58, E04H 15/32, E04H 15/60, E04H 1/12, E04H 15/64

(54) **Transportabler Pavillon mit Regenrinne**

(30) Priorität: 25.03.2010 DE 102010012829
(71) Anmelder: B & T Exact GmbH, 58285 Gevelsberg (DE)
(72) Erfinder: Tepel, Rolf Guido, 58256 Ennepetal (DE); Tepel, Jörg-Peter, 58285 Gevelsberg (DE)
(74) Vertreter: Schöneborn, Holger

(57) **Zusammenfassung**

Transportabler Pavillon umfassend auf einem Boden aufstellbare Stützelemente (102) und ein durch die Stützelemente (102) getragenes Dach, wobei das Dach eine Dachtraufe (108) aufweist, wobei an der Dachtraufe (108) eine Regenrinne (112) angeordnet ist, wobei zumindest eines der Stützelemente (102) eine Regenwasserableitung (120) aufweist, wobei die Regenwasserableitung (120) dazu ausgebildet sind, durch die Regenrinne (112) aufgefangenes Regenwasser zum Boden hin abzuleiten.

## Beschreibung

Die Erfindung betrifft einen transportablen Pavillon sowie eine Dichtlippe.

Aus dem Stand der Technik sind verschiedene Pavillons bekannt. Die DE 36 03 354 A1 offenbart beispielsweise einen Gartenpavilion, der aus einem Stabgerüst besteht, das eine Vielzahl von in Seitenabstand zueinander stehenden Stützstäben aufweist und dazu bestimmt ist, im oberen Bereich eines Kuppelabschnitts eine Spannung zu tragen.

Solche Pavillons haben allgemein den Nachteil, dass im Falle der Verwendung im Freien auf den besagten Kuppelabschnitt auftreffendes Regenwasser die entsprechende Bespannung entlangläuft und am Rand der Bespannung unkontrolliert vom Dach des Pavillons tropft. Darunter hindurch gehende Personen können dabei in ungewollter Weise in Kontakt mit größeren Mengen an Regenwasser geraten, was unerwünscht ist.

Um dieses Problem zu lösen, schlägt beispielsweise die DE 200 13 870 U1 ein Regenwasserablaufsystem für Pavillon-Campingzelte und Festzelte vor, die in die Dachplane integriert sind. Im Gewebe der Bespannung ist ein System eingebracht, über welches Regenwasser abgeleitet werden kann. Zu diesem Zweck sind verschiedene Löcher in der Bespannung zur Wasseraufnahme vorgesehen.

Weitere Regenwasser-Rückhaltesysteme, insbesondere für fahrbare Verkaufspavillons sind aus der DE 296 16 476 U1 sowie allgemein für Fertlgbauelemente aus der DE 30 34 774 A1 bekannt.

Ein weiterer Regenablauf für Pavillons und Zelte ist aus der DE 20 2008 012 576 U1 bekannt. Dieser Regenablauf ist dadurch gekennzeichnet, dass ein aus Wasser abweisendem, flexiblem Material bestehender Regenablauf mit Haken, je nach Bedarf zwischen zwei aneinander stehenden Pavillons oder Zelten montiert werden kann, um das Regenwasser an die entsprechenden Ecken abzuleiten.

Dem genannten Stand der Technik gegenüber liegt der vorliegenden Erfindung die technische Aufgabe zugrunde, einen verbesserten Pavillon sowie eine Dichtlippe zur wasserdichten Verbindung aneinander zu reihender Pavillons zu schaffen.

Die der Erfindung zugrunde liegenden Aufgaben werden mit den Merkmalen der unabhängigen Patentansprüche gelöst. Bevorzugte Ausführungsformen der Erfindung sind in den abhängigen Patentansprüchen angegeben.

Erfindungsgemäß wird ein transportabler Pavillon geschaffen, umfassend auf einem Boden aufstellbare Stützelemente und ein durch die Stützelemente getragenes Dach, wobei das Dach eine Dachtraufe aufweist, wobei an der Dachtraufe eine Regenrinne angeordnet ist, wobei zumindest eines der Stützelemente eine Regenwasserableitung aufweist, wobei die Regenwasserableitung dazu ausgebildet ist, durch die Regenrinne aufgefangenes Regenwasser zum Boden hin abzuleiten. Hierbei handelt es sich um eine gezielte Ableitung des Regenwassers mittels der Stützelemente, d.h. das Regenwasser rinnt nicht unkontrolliert an den äußeren Rändern der Stützelemente herunter, sondern wird gezielt durch die Stützelemente geleitet.

Ausführungsformen der Erfindung haben den Vorteil, dass auch größere Regenmassen gezielt vom Dach des Pavillons zum Boden hin abgeleitet werden können. Unkontrolliertes Tropfen des Pavillons wird vermieden und die ohnehin bei jedem Pavillon notwendigen Stützelemente werden gleichzeitig dazu benutzt, um in effektiver und unkomplizierter Weise das Regenwasser zum Boden hin gezielt abzuleiten.

Nach einer Ausführungsform der Erfindung sind zwischen den Stützelementen Querverstrebungen angeordnet, wobei die Regenrinne in eine der Querverstrebungen integriert ist. Damit ergibt sich der weitere Vorteil, dass die ebenfalls in den meisten Pavillons ohnehin notwendige Querverstrebungen gleichzeitig neben einer mechanischen Stabilisierungswirkung des Pavillons den Zweck einer effektiven Sammlung und Weiterleitung von Regenwasser hin zur Regenwasserableitung der Stützelemente erfüllen. Auf das Anbringen einer separaten Regenrinne an der Dachtraufe kann damit verzichtet werden. Nach einfacher Grundmontage des Pavillons ist damit die Regenrinne automatisch am Pavillon verfügbar.

Nach einer weiteren Ausführungsform der Erfindung umfasst der Pavillon ferner ein Verbindungselement, wobei an das zur Regenwasserableitung ausgebildete Stützelement unmittelbar angrenzende Querverstrebungen durch das Verbindungselement an diesem Stützelement mechanisch fixierbar sind, wobei das Verbindungselement eine integrierte Wasserführung aufweist, wobei die Wasserführung zur Führung des durch die Regenrinne aufgefangenen Regenwassers an die Regenwasserableitung des Stützelements ausgebildet ist.

Damit ist eine einfache und gezielte Führung des durch die Regenrinne aufgefangenen Regenwassers hin zur Regenwasserableitung der Stützelemente und damit zum Boden gewährleistet. Beispielsweise kann die integrierte Wasserführung ein trichterförmiges Element aufweisen, welches das durch die in den Querverstrebungen integrierten Regenrinnen aufgefangene Regenwasser sammelt und in die Regenwasserableitung der Stützelemente leitet.

Nach einer weiteren Ausführungsform der Erfindung ist die Regenwasserableitung in das die Regenwasserableitung aufweisende Stützelement integriert. Beispielsweise kann dies dadurch realisiert sein, dass es sich bei der Regenwasserableitung um eine röhrenförmige Aussparung des Stützelementes handelt. Dies ist insbesondere dann bevorzugt, wenn es sich bei den Stützelementen um Hohlprofile handelt, sodass der hohle Profilkörper selbst bereits die röhrenförmige Aussparung bildet. In diesem Fall genügt es, das Regenwasser in den Hohlraum der Stützelemente zu leiten, sodass das Wasser in den Stützelementen zum Boden hin geleitet wird.

Allerdings ist es auch möglich, dass in die röhrenförmige Aussparung des Stützelements eine separate Wasserleitung integriert wird, beispielsweise eine schlauchförmige Wasserleitung. Diese Wasserleitung leitet dann das in der Regenrinne gesammelte Wasser durch die Aussparung des Stützelements hin zum Boden. In diesem Fall kommt das Regenwasser mit den Wänden der Aussparung, d.h. im Falle eines hohlprofilartig ausgebildeten Stützelements mit der Innenseite des Stützelements, nicht in Berührung.

Diese Ausführungsform ist insbesondere dann bevorzugt, wenn an den Stützelementen weitere Komponenten, insbesondere elektrische Komponenten, angeordnet werden sollen. So ist es beispielsweise möglich, in die Stützelemente Steckdosen oder Lichtelemente zu integrieren bezüglich derer ein Kontakt mit Regenwasser vorzugsweise vermieden werden soll. Durch die Verwendung einer separaten Wasserleitung, die in den Stützelementen verläuft, kann dies zuverlässig gewährleistet werden.

Nach einer alternativen Ausführungsform handelt es sich bei der Regenwasserableitung um eine an der Außenseite des Stützelements angeordnete Wasserleitung.

Nach einer weiteren Ausführungsform der Erfindung weist die Dachtraufe einen Keder auf, wobei die Querverstrebungen eine Nut zur Aufnahme des Keders aufweisen. Mit anderen Worten besteht eine weitere Besonderheit der vorliegenden Erfindung darin, dass die Dachbespannung nicht, wie bei herkömmlichen Pavillonkonstruktionen üblich, durch Bänder oder Klettverbindungen fixiert sind, sondern dass entlang der Dachtraufe ein Keder integriert ist, welcher in mechanisch einfacher Weise in eine entsprechende Nut der vorhandenen Querverstrebungen aufgenommen werden kann. Dies gewährleistet weiter in unterstützender Weise, dass sich auf das Dach auftreffendes Regenwasser kontrolliert in die Regenrinne der Querverstrebung abläuft, dort sammelt und nicht aufgrund ungenügender Befestigungen der Dachbespannung unkontrolliert an den Stützelementen oder den Querverstrebungen hinunterrinnen oder abtropfen kann.

Ferner gewährleistet eine solche Befestigung der Dachbespannung, dass selbst bei starkem Regen und insbesondere in Verbindung mit dem Regen auftretenden starken Winden aufgrund dessen, dass die Dachbespannung von der Querverstrebung durch den Wind abgehoben wird, ein Eindringen von Regen in den Pavillon vermieden wird.

Nach einer Ausführungsform der Erfindung handelt es sich bei der Nut um eine Kederschiene. Dies hat den Vorteil, dass in einfacher Weise ohne zusätzliche Bauelemente eine sichere Montage der Dachbespannung möglich ist: In diesem Fall wird nämlich der Keder lediglich längs in die Kederschiene eingeführt, wodurch der Keder automatisch in der Kederschiene fixiert wird.

Eine Alternative dazu bietet sich in der Ausgestaltung der Nut als Hohlkehle, wobei der Pavillon ferner ein Befestigungsprofil zur Fixierung des Keders in der Hohlkehle aufweist. Hier ist zwar ein weiteres Bauelement des Pavillons in Form des Befestigungsprofils nötig. Allerdings ist dieser Nachteil dadurch aufgewogen, dass nun nach Festlegung der Querverstrebungen an den Stützelementen des Pavillons separat die Dachbespannung mit dem Keder an den Querverstrebungen fixiert werden kann. Das Aufbringen der Dachbespannung des Pavillons ist damit unabhängig vom Zusammenbau der übrigen Rahmenelemente (Stützelemente und Querverstrebungen) des Pavillons möglich.

Nach einer Ausführungsform der Erfindung handelt es sich bei dem Befestigungsprofil um ein Klemmprofil. Dieses kann beispielsweise mittels entsprechender Rastelemente an den Querverstrebungen fixiert werden. Möglich sind jedoch auch Schraubverbindungen. Entscheidend ist jedoch in beiden Fällen, dass die Fixierung des Befestigungsprofils an der jeweiligen Querverstrebung reversibel ist, d.h. ein nicht destruktives Zerlegen des Pavillons sollte möglich sein.

In einem weiteren Aspekt betrifft die Erfindung eine Dichtlippe zur Verbindung aneinander zu reihender Pavillons wie obig beschrieben. Dabei ist die Dichtlippe zur wasserdichten Überbrückung aneinander angrenzender Regenrinnen der aneinander zu reihenden Pavillons ausgebildet.

Eine solche Dichtlippe bringt den Vorteil mit sich, dass auch im Falle mehrerer aneinander gereihter Pavillons und der dadurch zwischen diesen Pavillons bestehenden Trennfuge ein Eindringen von Regenwasser in diese Trennfuge verhindert wird. In anderen Worten, werden Personen, die sich zwischen den Pavillons, d.h. im Bereich der Trennfuge, aufhalten, nicht durch Regenwasser ungewollt beeinträchtigt. Zusätzlich zur Dichtlippe, z,B. aus Kunststoff, kann zur mechanischen Stabilisierung der aneinander zu reihenden Pavillons eine Verbindungslasche z.B. aus Aluminium vorgesehen werden, welche eine mechanische stabile Verbindung zwischen den aneinander zu reihenden Pavillons schafft.

Nach einer weiteren Ausführungsform der Erfindung weist die Dichtlippe ein offenes Hohlprofil auf, wobei das offene Hohlprofil mit der Profilöffnung zum Boden hin weisend an den Regenrinnen ordenbar ist. Damit wird Regenwasser kontinuierlich beim Auftreffen auf die Trennfuge zwischen den aneinander angrenzenden Regenrinnen in die Regenrinnen selbst abgeleitet - das Entstehen eines Wassersacks, d.h. einer Aufstauung von Wasser in einem bestimmten Bereich, wird damit vermieden. Das Wasser wird kontinuierlich und kontrolliert abgeleitet.

Im Folgenden werden bevorzugte Ausführungsformen der Erfindung anhand von Zeichnungen näher erläutert. Es zeigen:
- Figur 1: eine perspektivische Ansicht einer Ecke eines Pavillons,
- Figur 2: eine Ansicht eines Verbindungselements,
- Figur 3: eine perspektivische Ansicht eines Pavillons,
- Figur 4: eine perspektivische Ansicht einer Querverstrebung mit Nut zur Aufnahme eines Keders einer Dachbespannung,
- Figur 5: eine schematische Ansicht zweier aneinander gereihter Pavillons mit einer Dichtlippe,
- Figur 6: eine weitere schematische Ansicht zweier aneinander gereihter Pavillons mit einer Dichtlippe;

Im Folgenden werden einander ähnliche Elemente mit gleichen Bezugszeichen gekennzeichnet.

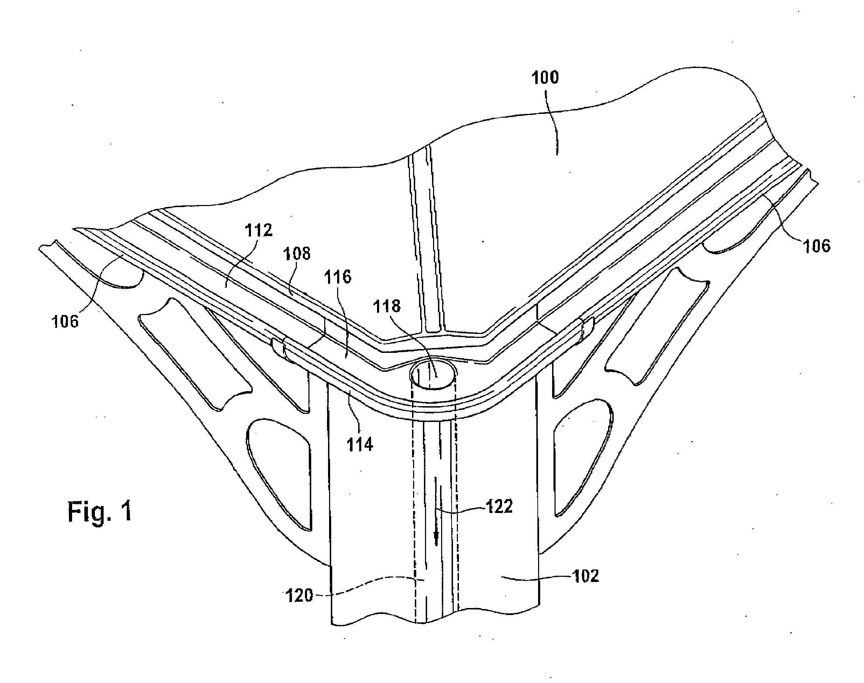

Die Figur 1 zeigt eine perspektivische Ansicht einer Ecke eines Pavillons. Der Pavillon umfasst Stützelemente 102 und Querverstrebungen 106. Die Stützelemente 102 stützen dabei den Pavillon am Boden, wobei die Querverstrebungen 106 für eine seitliche Stabilisierung des Pavillons in bekannter Weise sorgen.

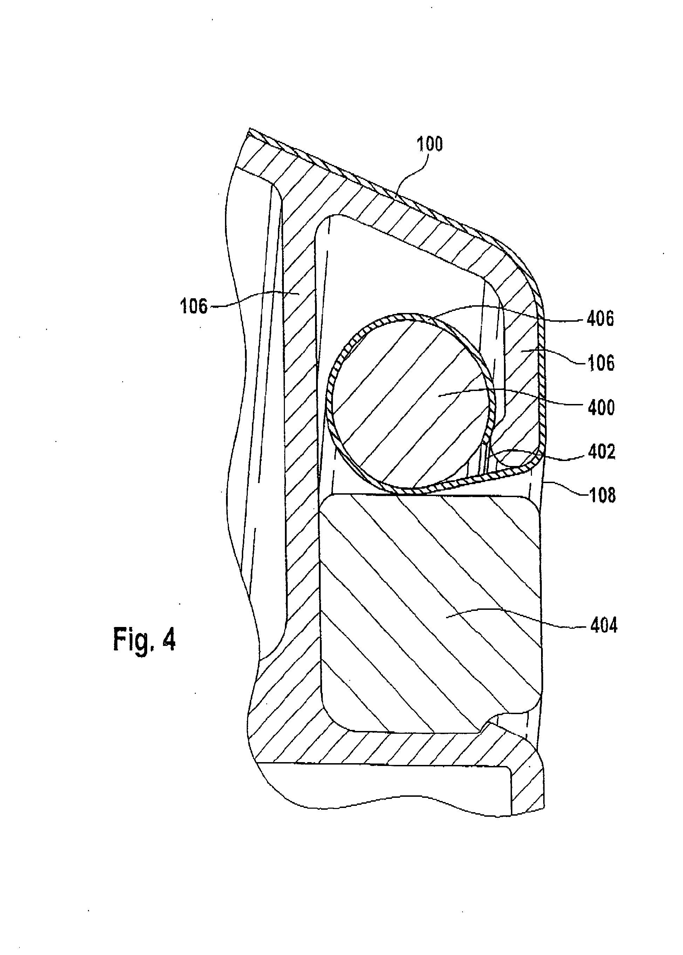

Ferner umfasst der Pavillon ein Dach, wobei das Dach eine Bespannung 100 umfasst. Das Dach weist ferner eine Dachtraufe auf, wobei diese Dachtraufe durch die Tropfkante der Bespannung 100 gebildet wird. Die Dachtraufe ist in Figur 1 mit dem Bezugszeichen 108 gekennzeichnet. Nicht gezeigt in Figur 1 ist die Fixierung der Bespannung 100 an der Querverstrebung 106, wobei dies jedoch im Detail in Bezug auf Figur 4 erläutert wird.

Insgesamt tragen also die Stützelemente 102 das Dach bzw. die Dachbespannung 100. An der Dachtraufe 108 ist nun eine Regenrinne 112 angeordnet. Im Ausführungsbeispiel der Figur 1 ist dabei die Regenrinne 112 in die Querverstrebungen 106 in Form einer Aussparung integriert. Beispielsweise kann es sich bei den Querverstrebungen 106 um Aluminiumprofile handeln, in welche eine Regenrinne 112 integriert ist, die das vom Dach des Pavillons abfließende Regenwasser aufnimmt. Aus der Regenrinne fließt dann das Regenwasser durch in die Stützelemente 102 integrierte Kanäle 120 in Richtung 122 zum Boden ab.

Damit das Wasser in kontrollierter Weise von der Regenrinne 112 in die Kanäle 120 der Stützelemente 102 gelangen kann, ohne beispielsweise an jenen Stellen, an denen die Querverstrebungen 106 an die Stützelemente 102 anstoßen, in unkontrollierter Weise aus der Regenrinne 112 auszutreten und an den Stützelementen 102 hinunterzurinnen, sind Verbindungselemente 114 vorgesehen. Diese Verbindungselemente 114 fixieren die Querverstrebungen 106, welche an das in Figur 1 abgebildete Stützelement 102 angrenzen, an diesem Stützelement 102. Das Verbindungselement 114 weist eine integrierte Wasserführung 116 in Form einer U-förmigen Aussparung auf, welche das Regenwasser von der Regenrinne 112 an eine im Verbindungselement 114 integrierte trichterförmige Öffnung 118 weiterleitet, durch welche hindurch das Wasser in den Kanal 120 gelangen kann.

Handelt es sich, wie bereits oben erwähnt, bei dem Kanal 120 um eine separate Wasserleitung, die in dem Stützelement 102 verläuft, wird durch die Verwendung des Verbindungselements 114 gewährleistet, dass Wasser ausschließlich in diese separate Wasserleitung gelangt und nicht in jenen Bereich innerhalb des Stützelements 102, welcher sich außerhalb der Wasserleitung 120 befindet. Damit können beliebige elektrische Elemente zusätzlich in die Stützelemente 102 integriert werden, ohne dass die Gefahr besteht, dass diese in ungewollter Weise in Kontakt mit Regenwasser treten.

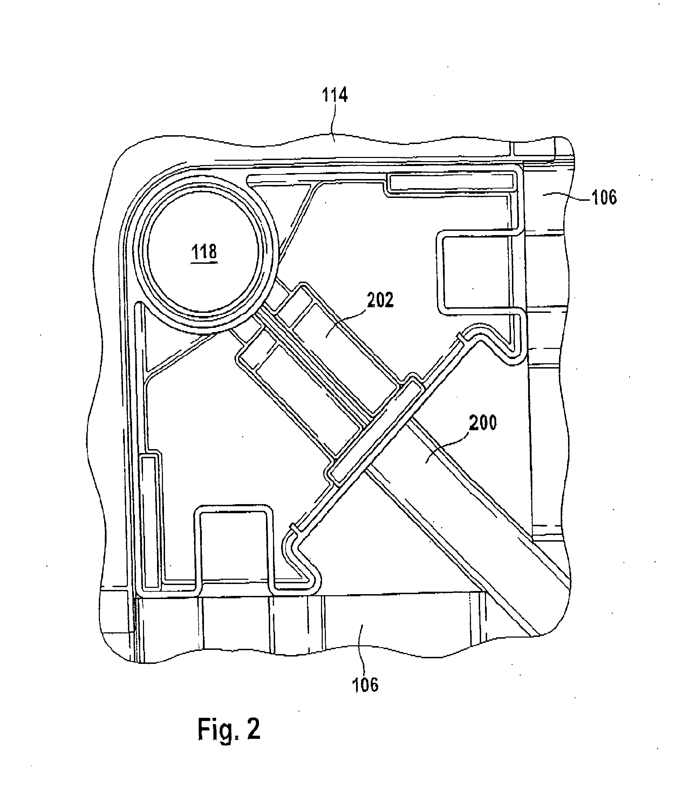

Die Figur 2 zeigt eine schematische Ansicht eines Verbindungselementes 114 von unten, d.h. aus Sicht eines anzuordnenden Stützelements 102. Das Verbindungselement 114 weist nicht näher dargestellte Elemente zur Aufnahme von Querverstrebungen 106 auf. Ferner kann sowohl das besagte Stützelement 102 (nicht gezeigt in Figur 2) an dem Verbindungselement fixiert werden, ebenso wie weitere Verstrebungen 200, welche in entsprechende Aufnahmen 202 des Verbindungselements 114 eingesteckt werden können. Solche Verstrebungen 200 können beispielsweise für eine Stabilisierung der Dachbespannung 100 und deren Aufspannung zur Bildung einer Dachkuppe dienen.

Ferner in Figur 2 gezeigt ist das trichterförmige Element 118, welches Teil einer in Figur 2 nicht näher gezeigten Wasserführung zur Führung des durch die Regenrinne aufgefangenen Regenwassers an die Regenwasserableitung des Stützelements ist.

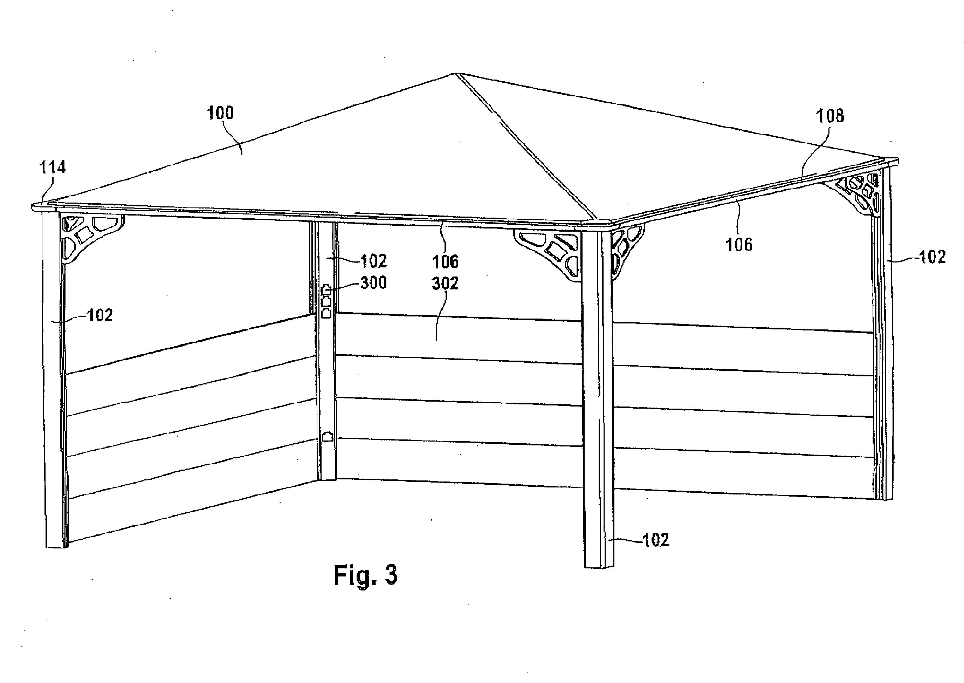

Die Figur 3 zeigt eine perspektivische Ansicht eines transportablen und zerlegbaren Pavillons, umfassend Stützelemente 102, Querverstrebungen 106 sowie eine Dachbespannung 100. Die Dachbespannung 100 wird durch die Querverstrebungen 106 und die Stützelemente 102 getragen.

Die Dachbespannung 100 weist eine Dachtraufe 108 auf, von welcher auf die Dachbespannung 100 auftreffendes Regenwasser in eine in Figur 3 nicht ersichtliche Regenrinne gelangen kann, wobei diese Regenrinne in die Querverstrebungen 106 integriert ist. Von der Regenrinne der Querverstrebungen 106 wird das Wasser dann in das Innere der Stützelemente 102 geleitet, wodurch es dann zum Boden hin abfließen kann.

Verbindungselemente 114 dienen dazu, die Stützelemente 102 mit unmittelbar angrenzenden Querverstrebungen 106 zu verbinden. Ferner haben diese Verbindungselemente 114 wie obig beschrieben eine Wasserführungsfunktion zur Führung des durch die Regenrinne aufgefangenen Regenwassers an die Regenwasserableitung der Stützelemente 102.

Ferner in Figur 3 gezeigt sind elektrische Anschlusselemente 300, zum Beispiel Steckdosen, welche in die Stützelemente 102 integriert sein können. Statt oder zusätzlich zu den elektrischen Anschlusselementen 300 können auch Lichtquellen zur Ausleuchtung des Pavillons in den Stützelementen angeordnet sein. Ebenso ist es möglich, dass entsprechende elektrische Elemente wie Steckdosen, Lichtquellen oder sogar Lautsprecher in die Stützelemente 102 und/oder Querverstrebungen 106 integriert sind. Besonders bevorzugt können in die Stützelemente 102 und/oder in die Querverstrebungen 106 Körperschalllautsprecher integriert sein. Diese haben den Vorteil, dass die Schallübertragung über die Wandungen der Stützelemente 102 bzw. der Querverstrebungen 106 erfolgt. Die Körperschalllautsprecher und die zugehörige Elektronik (Verstärker usw.) können so vollständig verkapselt und gegen Umwelteinflüsse (z.B. Regen, Feuchtigkeit) geschützt in den Konstruktionselementen des Pavillons verbaut sein. An einer gut zugänglichen Stelle z.B. an einem der Stützelemente 102 kann ein Anschluss für eine Audioquelle (MP3-Player oder dergleichen) vorgesehen sein, wobei die Audiowiedergabe dann über die integrierten Lautsprecher des Pavillons erfolgt

Durch die Integration der Regenrinne in die Querverstrebungen wird gewährleistet, dass kein Wasser an die Unterseite der Querverstrebungen, d.h. auf die dem Boden zugewandte Seite der Querverstrebungen 106, gelangen kann, sodass dort ohne Weiteres elektrische Bauelemente angeordnet werden können, Eine Stromversorgung kann in dem Fall mittels entsprechender Kontaktelemente zwischen den Stützelementen 102 und den Querverstrebungen 106 hergestellt werden. Realisierbar ist dies auch unter Zuhilfenahme entsprechender elektrischer Kontakte in den Verbindungselementen 114.

In Figur 3 ferner gezeigt sind Wandelemente 302, welche in entsprechende seitlich offene Längsfugen der Stützelemente geschoben werden können. Damit besteht auch ein seitlicher Wind- und Regenschutz innerhalb des in Figur 3 gezeigten Pavillons,

Ebenso kann wenigstens ein nach unten ausziehbares, federbelastetes Rollo an der Unterseite wenigstens einer der Querverstrebungen 106 angeordnet sein, um einen Sonnen-, Regen- oder Windschutz zu gewährleisten. Einhängeösen für das Rollo können an den zu dem Rollo benachbarten Stützelementen 102 angeordnet sein. Außerdem können die Stützelemente 102 Nuten zur Führung des Rollos aufweisen, damit das Rollo nicht frei vom Wind zu unerwünschtem Flattern angeregt werden kann.

Die Figur 4 zeigt eine schematische perspektivische Ansicht einer Dachtraufe mit einem Keder 406. Die Dachtraufe wird dabei durch eine Abtropfkante der Dachbespannung 100 gebildet, wobei am Ende der Dachbespannung 100 eine Kederschnur oder Kederstange 400 angeordnet ist. Der durch das Ende der Dachbespannung 100 und die Kederschnur oder Kederstange 400 gebildete Keder 406 ist in einer länglichen Nut 402 der Querverstrebung 106 aufgenommen. Im in Figur 4 gezeigten Ausführungsbeispiel erfolgt außerdem eine Fixierung des Keders 406 in der Nut 402 durch ein Befestigungsprofil 404. Mit anderen Worten, ist in Figur 4 der Keder 406 der Dachbespannung 100 in einer Hohlkehle 402 unter Verwendung des Befestigungsprofils 404 fixiert.

Bei diesem Befestigungsprofil 404 handelt es sich beispielsweise um ein Klemmprofil, welches in die Querverstrebung 106 einrastbar ist, um damit die Hohlkehle 402 zu verschließen. Dadurch ist die Kante, d.h. die Dachtraufe, formschlüssig am Befestigungsprofil 404 und damit an der Querverstrebung 106 festgelegt.

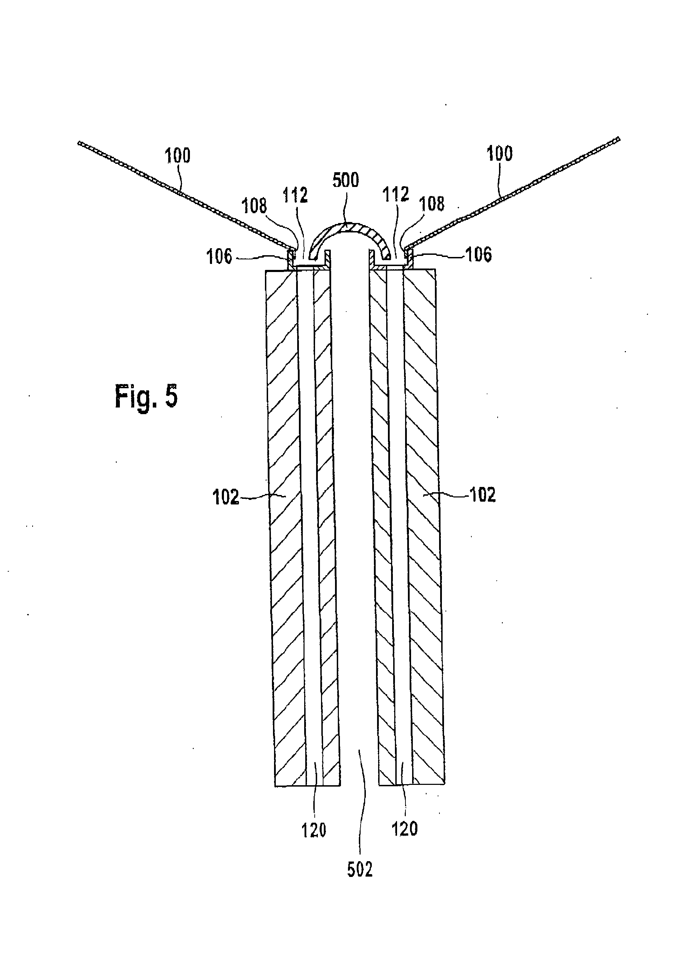

Die Figur 5 zeigt eine schematische Querschnittansicht zweier aneinander gereihter Pavillons, umfassend jeweils Stützelemente 102 und Querverstrebungen 106 mit integrierten Regenrinnen 112, welche von der Dachbespannung 100 im Bereich der jeweiligen Dachtraufen 108 abfließendes bzw. abtropfendes Wasser aufnehmen und in entsprechende Regenwasserableitungen 120 der Stützelemente 102 einleiten können.

Durch das Aneinanderreihen von Pavillons entsteht zwischen den aneinander angrenzenden Regenrinnen 112 der Pavillons eine Trennfuge 502, in welche in ungewollter Weise Regenwasser direkt senkrecht von oben eindringen kann. Aus diesem Grund ist, wie in Figur 5 mit dem Bezugszeichen 500 gekennzeichnet, eine Dichtlippe vorgesehen, wobei die Dichtlippe 500 zur wasserdichten Überbrückung der aneinander grenzenden Regenrinnen 112 der aneinander gereihten Pavillons ausgebildet ist. Konkret weist die Dichtlippe 500 ein offenes Hohlprofil auf, wobei das offene Hohlprofil mit der Profilöffnung zum Boden hinweisend an den Regenrinnen angeordnet ist. Wasser, das somit auf die Dichtlippe auftrifft, wird an den Seiten der Dichtlippe hinunterrinnend in den Regenrinnen 112 aufgenommen und von dort in die Regenwasserableitungen 120 der Stützelemente 102 geleitet.

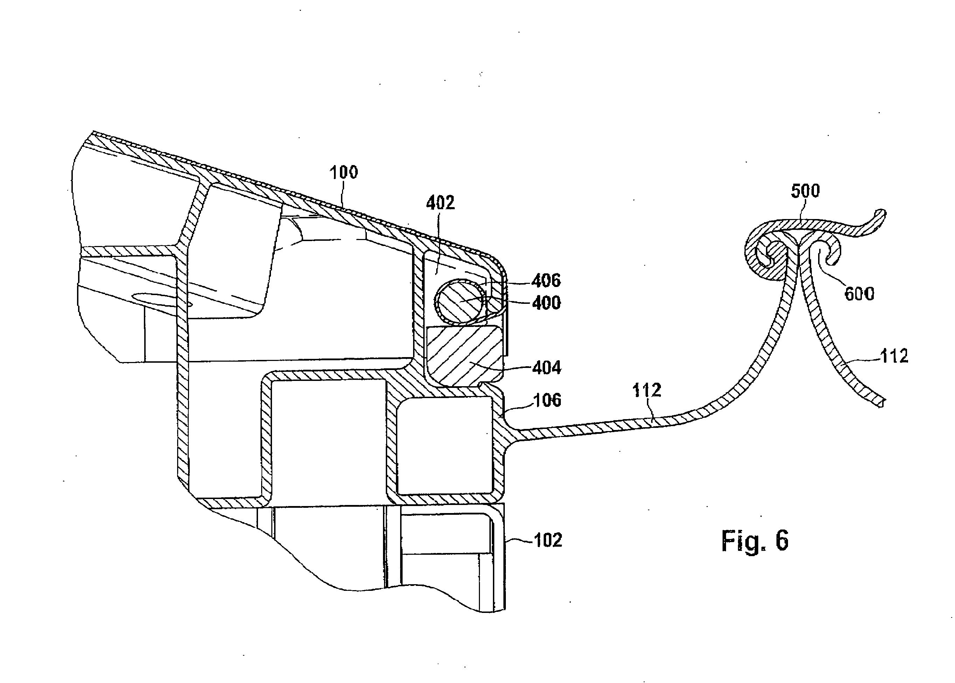

Die Figur 6 zeigt eine weitere schematische Ansicht zweier aneinander gereihter Pavillons mit einer Dichtlippe 500, wobei die Regenrinnen 112 der Querverstrebungen 106 zum jeweiligen Pavillon hin eingedreht sind, d.h. zumindest am vom Pavillon abstehenden Ende eine Schneckenform mit einer weiteren Nut 600 aufweisen. Diese Nut ist zur Aufnahme der Dichtlippe 500 ausgebildet, wobei in der Ausführungsform der Fig. 6 ein Ende der Dichtlippe 500 das vom Pavillon abstehende und zum Pavillon hin eingedrehte Ende der Querverstrebung 106 in der Nut 600 hintergreift.

Des Weiteren sichtbar ist in Fig. 6 die Dachtraufe, welche durch die Abtropfkante der Dachbespannung 100 gebildet wird. Am Ende der Dachbespannung 100 ist wiederum die Kederschnur oder Kederstange 400 angeordnet, wobei der durch das Ende der Dachbespannung 100 und die Kederschnur oder Kederstange 400 gebildete Keder 406 in der länglichen Nut 402 der Querverstrebung 106 aufgenommen ist. Durch das Befestigungsprofil 404 erfolgt eine Fixierung des Keders 406 in der Nut 402 und dadurch eine Spannung der Dachbespannung 100.

In Bezug auf die zuvor beschriebenen Ausführungsformen sei darauf hingewiesen, dass es alternativ zur Integration der Regenrinne in eine Querverstrebung mittels einer entsprechenden länglichen Aussparung der Querverstrebung möglich ist, die Regenrinne auch als separates Element bereitzustellen, welches durch entsprechende Befestigungselemente, wie beispielsweise Rastelemente, an den Querverstrebungen und/oder der Dachtraufe fixierbar ist. Allerdings wird die Integration der Regenrinne in eine der Querverstrebungen bevorzugt, da hierdurch die Anzahl an Bauelementen, insbesondere im Hinblick auf eine praktikable Transportabilität des Pavillons minimiert wird.

### Bezugszeichenliste

- 100: Dachbespannung
- 102: Stützelement
- 106: Querverstrebung
- 108: Dachtraufe
- 112: Regenrinne
- 116: Wasserführung
- 118: trichterförmige Öffnung
- 120: Regenwasserableitung
- 122: Richtung
- 200: Verstrebung
- 202: Aufnahme
- 300: Steckdose
- 302: Wandelement
- 400: Kederschnur oder Kederstange
- 402: Nut
- 404: Befestigungsprofil
- 406: Keder
- 500: Dichtlippe
- 600: Nut

## Patentansprüche

1. Transportabler Pavillon umfassend auf einem Boden aufstellbare Stützelemente (102) und ein durch die Stützelemente (102) getragenes Dach, wobei das Dach eine Dachtraufe (108) aufweist, wobei an der Dachtraufe (108) eine Regenrinne (112) angeordnet ist, wobei zumindest eines der Stützelemente (102) eine Regenwasserableitung (120) aufweist, wobei die Regenwasserableitung (120) dazu ausgebildet sind, durch die Regenrinne (112) aufgefangenes Regenwasser zum Boden hin abzuleiten.

2. Pavillon nach Anspruch 1, wobei zwischen den Stützelementen (102) Querverstrebungen (106) angeordnet sind, wobei die Regenrinne (112) in eine der Querverstrebungen (106) integriert ist.

3. Pavillon nach Anspruch 2, ferner mit einem Verbindungselement (114), wobei an das zur Regenwasserableitung (120) ausgebildete Stützelement unmittelbar angrenzende Querverstrebungen (106) durch das Verbindungselement (114) an diesem Stützelement fixierbar sind, wobei das Verbindungselement eine integrierte Wasserführung (116; 118) aufweist, wobei die Wasserführung zur Führung des durch die Regenrinne (112) aufgefangenen Regenwassers an die Regenwasserableitung (120) des Stützelements (102) ausgebildet ist.

4. Pavillon nach einem der vorigen Ansprüche, wobei die Regenwasserableitung (120) in das die Regenwasserableitung (120) aufweisende Stützelement (102) integriert ist.

5. Pavillon nach Anspruch 4, wobei es sich bei der Regenwasserableitung (120) um eine röhrenförmige Aussparung des Stützelements handelt.

6. Pavillon nach Anspruch 4, wobei das die Regenwasserableitung (120) aufweisende Stützelement eine röhrenförmige Aussparung aufweist, wobei es sich bei der Regenwasserableitung (120) um eine in der röhrenförmigen Aussparung verlaufende Wasserleitung handelt.

7. Pavillon nach Anspruch 4, wobei es sich bei der Regenwasserableitung (120) um eine an der Außenseite des Stützelements angeordnete Wasserleitung handelt.

8. Pavillon nach einem der vorigen Ansprüche 2 bis 7, wobei die Dachtraufe (108) einen Keder (406) aufweist, wobei die Querverstrebungen (106) eine Nut (402) zur Aufnahme des Keders (406) aufweisen.

9. Pavillon nach Anspruch 8, wobei es sich bei der Nut (402) um eine Kederschiene handelt.

10. Pavillon nach Anspruch 8, wobei es sich bei der Nut um eine Hohlkehle (402) handelt, wobei der Pavillon ferner ein Befestigungsprofil (404) zur Fixierung des Keders in der Hohlkehle aufweist.

11. Pavillon nach Anspruch 10, wobei es sich bei dem Befestigungsprofil (404) um ein Klemmprofil handelt.

12. Pavillon nach einem der vorigen Ansprüche, wobei zumindest eines der Stützelemente (102) eine Aussparung zur Aufnahme einer Steckdose (300) aufweist.

13. Pavillon nach einem der vorigen Ansprüche, ferner mit einer Verstrebung (200) des Dachs, wobei in der Verstrebung (200) ein elektrischer Anschluss für eine Deckenleuchte und/oder eine Deckenleuchte vorgesehen sind.

14. Pavillon nach einem der vorigen Ansprüche, wobei wenigstens ein nach unten ausziehbares, federbelastetes Rollo an der Unterseite wenigstens einer der Querverstrebungen (106) angeordnet ist.

15. Pavillon nach Anspruch 14, wobei Einhängeösen für das Rollo an den Stützelementen (102) angeordnet sind.

16. Pavillon nach Anspruch 14 oder 15, wobei die Stützelemente (102) Nuten zur Führung des Rollos aufweisen.

17. Pavillon nach einem der Ansprüche 1 bis 16, wobei in wenigstens eines der Stützelemente (102) und/oder in eine der Querverstrebungen (106) wenigstens eine Steckdose (300), eine Lichtquelle oder ein Lautsprecher integriert ist.

18. Dichtlippe (500) zur Verbindung aneinander zu reihender Pavillons nach Anspruch 1, wobei die Dichtlippe (500) zur wasserdichten Überbrückung aneinandergrenzender Regenrinnen (112) der aneinander zu reihenden Pavillons ausgebildet ist.

19. Dichtlippe (500) nach Anspruch 18, wobei die Dichtlippe (500) ein offenes Hohlprofil aufweist, wobei das offene Hohlprofil mit der Profilöffnung zum Boden hinweisend an den Regenrinnen (112) anordenbar ist.
